# EUROPEAN PATENT APPLICATION

(11) **EP 1 481 829 A2**
(43) Date of publication of application: **01.12.2004**
(21) Application number: 04012459.6
(22) Date of filing: 26.05.2004
(51) Int. Cl.: B60H 1/32, B60S 1/48, B60S 1/52, B60S 1/50

(54) **System for utilizing water originating from the air conditioning system in order to supply water to the automobile windshield wiper reservoir**

(30) Priority: 26.05.2003 BR 8301358 U
(71) Applicant: Walter Duarte Barreto Junior, CEP 42700-000 Lauro de Freitas, Bahia (BR)
(72) Inventor: Walter Duarte Barreto Junior, CEP 42700-000 Lauro de Freitas, Bahia (BR)
(74) Representative: Pereira da Cruz, Joao, Manuel, May

(57) **Abstract**

System for utilizing water originating from the air conditioning system in order to supply water to the automobile windshield wiper reservoir, composed of the equipment necessary in order to generate air conditioning such as the compressor (1), condenser (2), evaporating compartment (3) characterized by a water-collecting container (5) below the level of the evaporating compartment (3) that has a duct (4) or another means of interconnecting the evaporating compartment (3) to an exit (7), in the upper portion.

## Description

The present invention relates to a system that utilizes water from humidity condensation originating from the automobile's air conditioning equipment and supplies water to a reservoir that cleans the automobile's windshield.

It is well known that all air conditioning equipment produces a constant dripping of water while it is funtioning. This also happens in an automobile's air conditioning equipment, and this water is reused and once again put to such good use that it has become a reason for an important commercial demand in the automotive sector. There are many people who do not know how, do not enjoy or are unaware of how to perform car maintenance. For some people, refuelling the automobile once every week is enough of an unpleasant task. Even more unpleasant yet is stopping at a gas station to refuel and still having to open the car hood in order to perform some service.

New cars already have two great advantages in regard to older models: the motor oil lever does not decrease, making it necessary to change oil only on scheduled car-checkup dates; and there is no need to complete cooling water for the motor since it is always at the appropriate level. However, there still exists a need to open the car hood and fill up the water reservoir for the windshield wipers.

For the car owner it would be much accommodating if it were never necessary to open the car hood when stopping at a gas station, leaving this work for automobile concessionaires on the scheduled date for a vehicle checkup.

Therefore, the windshield wiper reservoir should have an automatic water supply system, eliminating the sole reason for which it is necessary to open the automobile's hood at these fuel stops.

The system that is the object of this application includes installation of a water-collecting container place immediately below the air conditioner's evaporation compartment in order to collect the water originating from humidity condensation of the air in this location that by gravity passes to the water-collecting container through a tube or passage. This water collecting container shall have a size and shape that is convenient for the space available in the automobile's motor, near the upper portion, also an exit from which excess water is eliminated that may accumulate in the collecting container, thus preventing water from returning to the evaporating compartment.

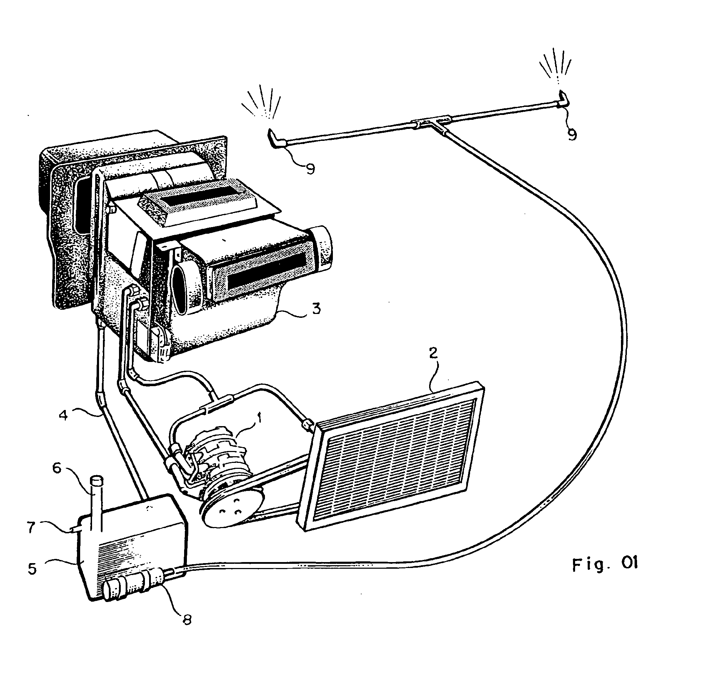

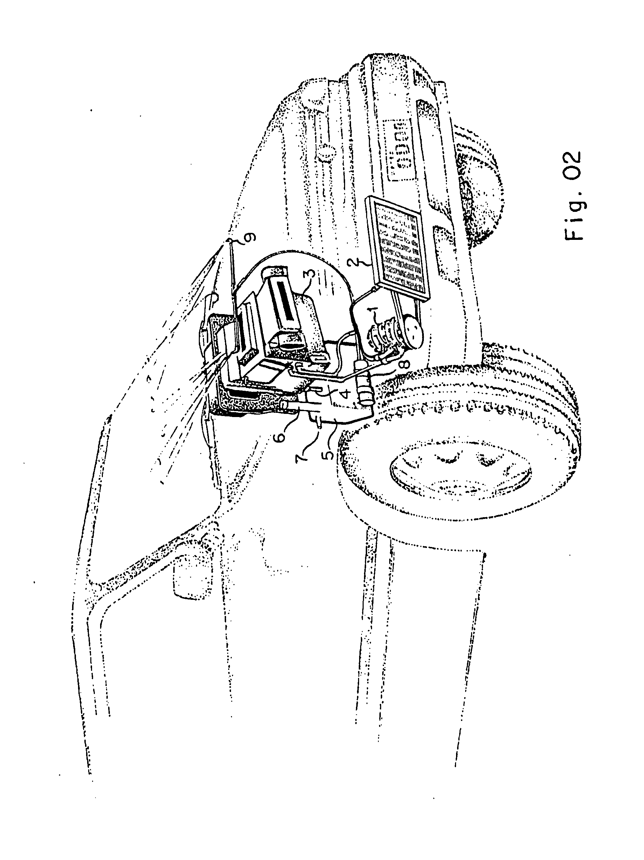

In the drawings annex and that are an integral part of this report, Figure 1 is a view that exclusively shows the equipment that is part of this system and Figure 2 shows this equipment installed in the automobile with the difference that in this Figure the water-collecting container is located immediately below the evaporating compartment.

As may be inferred from the drawings, the system is composed of the equipment necessary for generating as conditioning such as (1) the compressor (2) evaporating compartment (3) with the water-collecting container added; (5) that receives water from the evaporating compartment (3) through the duct (4). The water-collecting container (5) has an entrance (6) that is long enough to reach the upper portion of the motor in order that, if necessary, the same may be supplemented manually with water. It also has an exit (7) that eliminates excess water. Thus preventing such water from returning to the evaporation compartment (3) and finally, the motor (8) for propelling the water from the collecting container (5) to the windshield wiper jets (9).

## Claims

1. System for utilizing water originating from the air conditioning system in order to supply water to the automobile windshield wiper reservoir, composed of a compressor (1), condenser (2), evaporating compartment (3), added to a water-collecting container (5) that receives the water from the evaporating compartment (3) through the duct (4) and has an exit (7), in the upper portion in order to eliminate excess water, bring the water from the collecting container (5) sprayed by means of a motor (8) onto the automobile's windshield the water jets.
